Europäisches Patentamt

European Patent Office

Office européen des brevets

(19)

(11) Numéro de publication: **0 090 698**
**A1**

(12) # DEMANDE DE BREVET EUROPEEN

(21) Numéro de dépôt: 83400519.1

(22) Date de dépôt: 14.03.83

(51) Int. Cl.³: **F 16 B 37/12**

---

(30) Priorité: **23.03.82 FR 8204903**

(43) Date de publication de la demande: **05.10.83**
**Bulletin 83/40**

(84) Etats contractants désignés: **CH DE GB IT LI NL SE**

(71) Demandeur: **OTALU S.A., Z.I. de l'Albanne Route d'Apremont, F-73490 La Ravoire (FR)**

(72) Inventeur: **Meillat, Gérard, Le Récamier 25bis, rue du Buisson Rond, F-73000 Chambery (FR)**

(74) Mandataire: **Flechner, Willy et al, CABINET FLECHNER 22, Avenue de Friedland, F-75008 Paris (FR)**

---

(54) **Filet hélicoïdal à autotaraudage et fil pour sa fabrication.**

(57) Ce filet hélicoïdal comprend une partie (2) extérieure formant filetage à section droite triangulaire et une partie (3) inférieure formant taraudage à section droite trapézoïdale.

## Filet hélicoïdal à autotaraudage et fil pour sa fabrication.

La présente invention concerne des filets hélicoïdaux rapportés ayant une extrémité recourbée radialement pour former un entraîneur permettant la pose. Ces filets sont destinés à être engagés à force dans les parois de perçages ménagés dans des pièces en matières tendres, telles que le bois, les matières plastiques, les agglomérés et autres matières semblables. Ces inserts se comportent comme des armatures métalliques dans lesquelles viennent se visser des vis normalisées.

Jusqu'ici on utilisait à cet effet un filet hélicoïdal à spires sensiblement jointives, dont la section droite était symétrique en forme de losange. Comme les spires sont très rapprochées, les sommets du filetage extérieur destinés à s'ancrer dans le bois sont très rapprochés eux aussi et ne permettent pas de conserver dans le bois des parties intermédiaires suffisamment épaisses pour résister aux contraintes. Il se produit un hachage du bois très préjudiciable à la bonne retenue du filet dans son logement.

Pour y remédier, on a proposé d'augmenter le pas du filet, ce qui ménage des parties intermédiaires plus épaisses dans le bois. Malheureusement cette augmentation du pas fait que la partie intérieure du filet faisant office de taraudage ne répond plus aux normes de la visserie. Il faut donc prévoir des vis de fabrication spéciale applicables à ce nouveau taraudage.

L'invention pallie les inconvénients énumérés ci-dessus par un filet de vis qui s'ancre bien dans la paroi d'un perçage et qui, cependant, s'accommode d'une vis normalisée.

L'invention a donc pour objet un filet hélicoïdal rapporté ayant une extrémité recourbée radialement et comprenant une partie extérieure formant filetage à section droite triangulaire et une partie intérieure formant taraudage, caractérisé en ce que la partie intérieure formant taraudage a une section droite trapézoïdale.

Grâce à l'asymétrie de la section droite, on obtient à la fois un ancrage solide par la partie extérieure formant filetage à section droite en forme de triangle, de préférence isocèle avec un angle compris entre les deux côtés égaux inférieur à 60°, et une adaptation aux vis normalisées par la partie intérieure formant taraudage à section droite en forme de trapèze. De préférence, le trapèze est isocèle afin de transmettre d'une manière plus uniforme les sollicitations entre la vis et le filet.

De préférence, le quotient du diamètre du sommet du taraudage au pas du filet est compris entre 1,5 et 3,5 environ. Ceci correspond sensiblement à un filet de pas deux fois plus grand que ceux à spires jointives utilisés jusqu'ici. De préférence, la longueur de la petite base est supérieure au quart du pas.

Aux dessins annexés, donnés uniquement à titre d'exemple :

la figure 1 est une vue en élévation partiellement coupée d'un filet hélicoïdal rapporté suivant

la figure 2 est une vue de droite de la figure 1 ; et

la figure 3 est un schéma du filet suivant l'invention engagé dans la paroi d'un perçage ménagé dans une pièce en matériau tendre, une vis étant vissée dans le taraudage du filet.

Le filet suivant l'invention est formé d'un fil en acier au carbone enroulé en hélice. L'une des extrémités 1 du fil est recourbée radialement pour former un entraîneur permettant la pose du filet à l'aide d'un outil de pose. La section droite du fil est formée d'un triangle isocèle dont le sommet 2 de l'intersection des deux côtés égaux pointe vers l'extérieur et forme le sommet du filetage extérieur du filet. L'angle au sommet 2 est de 50°. Le côté du triangle, opposé au sommet 2, forme la grande base d'un trapèze isocèle dont la petite base 3 forme le sommet du taraudage intérieur du filet. La petite base 3 forme un angle de 30° avec les côtés non parallèles du trapèze. Elle a une longueur de 0,76 mm. La distance entre le sommet 2 et la petite base est de 2,06 mm. Le pas du filet est de 1,81 mm. Le quotient du diamètre intérieur du sommet 3 du taraudage au pas est égal à $4,9/1,8 = 2,7$.

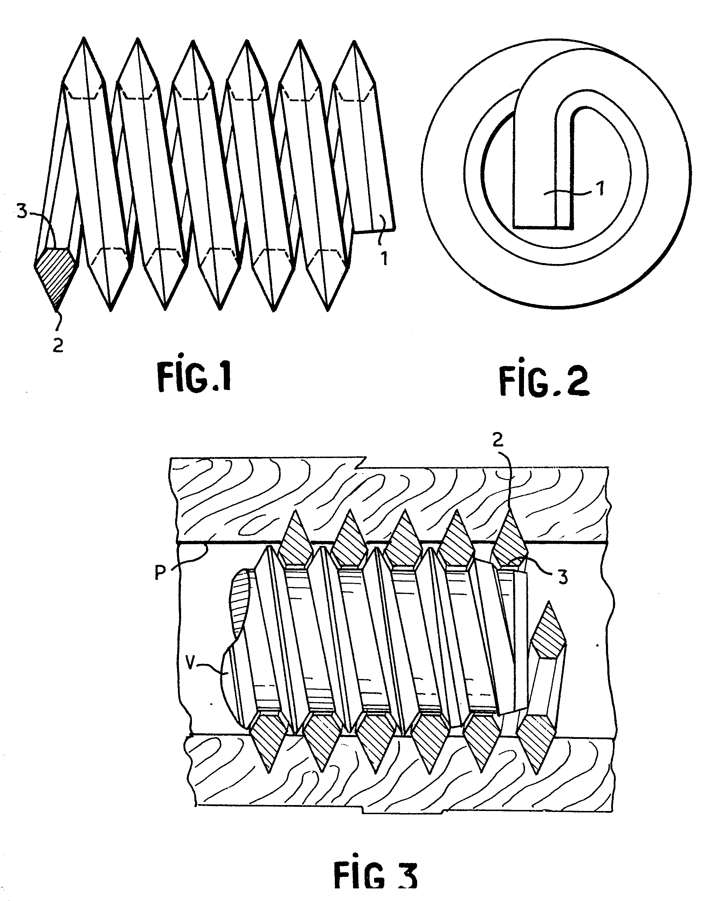

A la figure 3, le filet hélicoïdal est rapporté dans la paroi P d'un perçage d'une pièce en bois. Une vis V est vissée dans le taraudage 3 du filet. Comme la surface de contact du filet et de la vis V est importante, en raison de la configuration trapézoïdale du taraudage, les sollicitations dues à la vis V sont bien transmises à la pièce de bois par l'intermédiaire du filet bien que le pas de celui-ci soit relativement grand. Néanmoins les points d'attaque par les sommets 2 dans le bois sont suffisamment distants les uns des autres pour que les parties en saillie du bois comprises entre deux sommets 2 adjacents soient assez épaisses pour supporter les efforts.

Le filet peut être en acier au carbone, en acier inoxydable ou en tout autre métal ou alliage de propriété ressort qui convient comme matériau pour ressort.

REVENDICATIONS

1. Filet hélicoïdal rapporté ayant une extrémité recourbée radialement et comprenant une partie (2) extérieure formant filetage à section droite triangulaire et une partie (3) intérieure formant taraudage, caractérisé en ce que la partie (3) intérieure formant taraudage a une section droite trapézoïdale.

2. Filet suivant la revendication 1, caractérisé en ce que le quotient du diamètre du sommet du taraudage au pas du filet est compris entre 1,5 et 3,5 environ.

3. Filet suivant la revendication 1 ou 2, caractérisé en ce que la petite base du trapèze est plus à l'intérieur que la grande base.

4. Filet suivant la revendication 1, 2 ou 3, caractérisé en ce que la longueur de la petite base est supérieure au quart du pas.

5. Filet suivant l'une des revendications précédentes, caractérisé en ce que le triangle est isocèle.

6. Filet suivant la revendication 5, caractérisé en ce que l'angle compris entre les deux côtés égaux du triangle est inférieur à 60°.

7. Filet suivant l'une des revendications précédentes, caractérisé en ce que le trapèze est isocèle.

8. Fil métallique, caractérisé en ce qu'il a la section droite du filet des revendications 1 à 7.

9. Fil métallique suivant la revendication 8, caractérisé en ce qu'il est enroulé en hélice.

**FIG.1**

**FIG.2**

**FIG 3**

0090698

Office européen
des brevets

**RAPPORT DE RECHERCHE EUROPEENNE**

Numéro de la demande

EP  83 40 0519

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-C- 126 935 (THIOLLIER) | | F 16 B 37/12 |
| A | FR-A- 835 725 (CAMINEZ) | | |
| A | GB-A-1 189 063 (CROSS) | | |

| | | | DOMAINES TECHNIQUES RECHERCHES (Int. Cl. ³) |
|---|---|---|---|
| | | | F 16 B |

Le présent rapport de recherche a été établi pour toutes les revendications

| Lieu de la recherche | Date d'achèvement de la recherche | Examinateur |
|---|---|---|
| LA HAYE | 14-07-1983 | VAN DER WAL W |